# EUROPEAN PATENT SPECIFICATION

(11) **EP 4 204 889 B1**
(45) Date of publication and mention of the grant of the patent: **21.10.2026**
(21) Application number: 20772206.7
(22) Date of filing: 28.08.2020
(51) Int. Cl.: G02B 27/00, G02B 27/01

(54) **PROJECTION OF AN IMAGE IN AN EXTENDED REALITY DEVICE**
PROJEKTION EINES BILDES IN EINER VORRICHTUNG DER ERWEITERTEN REALITÄT
PROJECTION D'UNE IMAGE DANS UN DISPOSITIF DE RÉALITÉ ÉTENDUE

(43) Date of publication of application: 05.07.2023
(73) Proprietor: Telefonaktiebolaget LM Ericsson (publ), 164 83 Stockholm (SE)
(72) Inventor: TUFVESSON, Pex, 226 48 Lund (SE); BERKEMAN, Anders, 226 49 Lund (SE); DROUGGE, Carl, 216 19 Malmö (SE)
(74) Representative: Ericsson
(86) International application number: PCT/EP2020/074157
(87) International publication number: WO 2022/042859

(56) References cited:
- WO-A1-2016/164207
- WO-A1-2016/180702
- CN-A- 106 708 270
- CN-A- 107 977 076
- US-A1- 2012 154 277
- US-A1- 2012 293 407
- US-A1- 2017 099 478
- US-A1- 2018 075 653
- US-A1- 2019 066 353
- US-A1- 2019 302 883
- DICK BURBIDGE ET AL: "HARDWARE IMPROVEMENTS TO THE HELMET MOUNTED PROJECTOR", 1 January 1989 (1989-01-01), XP055150422, Retrieved from the Internet <URL:http://proceedings.spiedigitallibrary.org/> [retrieved on 20141103]

## Description

### TECHNICAL FIELD

The present disclosure relates generally to the field of extended reality. More particularly, it relates to projection of an image in an extended reality device.

### BACKGROUND

Typically in an extended reality device, an extended reality environment, e.g., a virtual reality scene, is rendered with a projected, i.e., guessed, position and direction of the viewer's eyes.

One example of projection comprises asynchronous reprojection.

Asynchronous reprojection in prior art is limited to operate within a frame rate of a display in the extended reality device as well as controlling circuitry for rendering the extended reality environment.

A first drawback of asynchronous reprojection in prior art is perceived latency and lag in the rendering of the extended reality environment due to the frame rate and/or the controlling circuitry.

A second drawback of asynchronous reprojection in prior art is interruptions in the rendering of the extended reality environment due to the frame rate and/or the controlling circuitry.

The prior art document published as US2019302883A1 discloses a system where perceived clarity of an image presented by a display can be improved using an image stabilization technique to stabilize the image relative to a user's retina. During an illumination period, stabilization actuators are controlled to move a display panel or adjust optical components in the path of light associated with the image to shift the location of the image on the user's retina in response to head or eye movement detected by the system. In some embodiments, a display is configured to illuminate an image, and at least one stabilization actuator is configured to stabilize the image in a retina space associated with a user. Changes in the retina space can be detected by one or more sensors configured to detect a head position of the user and/or an orientation of the user's retina. The image is stabilized in retina space using the stabilization actuators.

The prior art document published as WO2016180702A1 discloses an eye tracking device comprising a processing unit and an optical system, which comprises a capturing unit. The optical system provides a first optical path with a first imaging property and a second optical path with a second imaging property and the capturing unit captures a first image by capturing light that has passed along the first optical path and a second image by capturing light that has passed along the second optical path, so that due to the difference of the first and second imaging property the first and the second image comprise a difference related to a characteristic of at least part of the first and the second image, wherein the eye tracking device is configured to determine a property of the eye on the basis of at least one of the first image and the second image.

The prior art document published as US2012293407A1 discloses a Head Mounted Display (HMD) device and an image display control method are disclosed. The device includes a display unit including a left display and a right display for a left eye and a right eye for displaying images for the left eye and the right eye, a vital reaction sensor unit including a first vital reaction sensor for the left eye and a second vital reaction sensor for the right eye, detecting vital reaction changes of a user viewing the left display and the right display, and generating, when a vital reaction change is detected, an interruption signal including coordinates of a position at which the vital reaction change is detected, and a control unit for outputting images for the left eye and the right eye to the display unit.

The prior art document published as CN107977076A discloses a wearable virtual reality device. The wearable virtual reality device comprises a first guide rail and a second guide rail fixedly connected with a headband successively from the nearest to the farthest, a camera connected with the first guide rail in a translatable and rotatable manner, and an imager connected with the second guide rail in a translatable and rotatable manner. The headband is used to fix the wearable virtual reality device on the head of the user; the camera is used to track and photograph the eyeball of the user to determine the optical axis of the eyeball; and the imager is used to provide the user with an image and present the image in the optical axis of the eyeball. According to the wearable virtual reality device disclosed by the present invention, the user can obtain a good three-dimensional stereoscopic vision and virtual reality experience when turning the eyeball, and the user feels more comfortable when wearing the device fora long time by adjusting the center of gravity of the device, so that damage to the user body caused by the device can be avoided.

The prior art document published as CN106708270A discloses a display method for a virtual reality device. The method comprises the steps of tracking eyeballs of a current user in real time; and when it is detected that the eyeballs move, generating a driving instruction for enabling a driving part to drive a screen to move according to a moving direction of the eyeballs, thereby removing black edges of the virtual reality device. According to the technical scheme, the screen is controlled to correspondingly move when the eyeballs move, so that the phenomenon of the black edges of the VR device is effectively eliminated, the immersion of the user is improved, the reality sense of experiencing VR by the user is improved, and the usage experience of the user is improved. In addition, embodiments of the invention provide a corresponding realization apparatus and the virtual reality device, aiming at the display method for the virtual reality device. The method is more practical. The apparatus and the virtual reality device have the corresponding advantages.

The prior art document published as US2017099478A1 discloses a headset for providing images to a user is provided. The headset is configured to attach to a user's head and includes displays positioned adjacent to a user's eyes. A display support arm is connected to the displays. A motor is connected to the display support arm and drives the display support arm between multiple positions. A camera is positioned adjacent to the user's eyes and records the user's eyes. A processor receives data from the camera regarding a position and movement of the user's eyes. The processor uses the data from the camera to drive the motor and to position the display support arm with respect to the user's eyes such that the displays maintain a position adjacent to the user's eyes.

The prior art document published as US2018075653A1 discloses headset devices, such as virtual reality helmets, present visuals that respond to the user's motion, such that a rotation of the user's head causes the visual to be re-rendered from a correspondingly rotated perspective. The lag between the user's motion and the updated rendering from the new perspective may be perceivable even at high framerates, and may induce unpleasant feelings such as vertigo. Instead, headset devices may respond to detected motion by identifying a displacement of the physical location of the visual that causes it to maintain a physical position relative to a stationary reference point. The display is operatively coupled with a displacer, such as actuators or a projection adjustment, that are engaged to displace the display according to the identified displacement and maintain a physical location of the visual relative to the stationary reference point (e.g., until the visual is re-rendered from the updated perspective).

Therefore, there is a need for alternative approaches for projection of images in extended reality devices.

### SUMMARY

It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an apparatus is referred to herein, it is to be understood as a physical product. The physical product may comprise one or more parts, such as controlling circuitry in the form of one or more controllers, one or more processors, or the like.

It is an object of some embodiments to solve or mitigate, alleviate, or eliminate at least some of the above or other drawbacks.

According to a first aspect, this is achieved by a method for controlling projection of an image in an extended reality device comprising an optical element, a display, and a motion tracker, wherein the optical element and/or the display are mounted movement flexible in the extended reality device as per the appended claims.

The method comprises obtaining motion information of the extended reality device from the motion tracker, and determining a compensating movement of the optical element and/or the display for projection of the image based on the obtained motion information of the extended reality device.

The method further comprises controlling projection of the image by moving the optical element and/or the display based on the determined compensating movement.

In some embodiments, the method further comprises obtaining position information for the image to be displayed from controlling circuitry operably connected to the extended reality device, obtaining timing information for when the image is to be displayed from controlling circuitry operably connected to the extended reality device, and displaying the image based on the obtained position information and the obtained timing information.

The method further comprises obtaining virtual motion information of objects in an extended reality environment from controlling circuitry operably connected to the extended reality device, and determining the compensating movement of the optical element and/or the display for projection of the image based on the obtained virtual motion information of the objects in the extended reality environment.

In some embodiments, the motion information of the extended reality device comprises position and/or movement information.

In some embodiments, the virtual motion information of objects in the extended reality environment comprises virtual position and/or virtual movement information.

In some embodiments, the controlling of projection of the image comprises mechanically moving the optical element and/or the display based on the determined compensating movement.

In some embodiments, any one of obtaining motion information, obtaining virtual motion information, determining a compensating movement based on the obtained motion information and/or the virtual motion information, and controlling projection based on the determined compensating movement is performed continuously for controlling projection of the image continuously in the extended reality device.

In some embodiments, the projection comprises an asynchronous reprojection.

In some embodiments, the asynchronous reprojection comprises an extended reality scene.

In some embodiments, the extended reality scene is rendered with a projected and predicted position and direction of a viewer's eyes.

In some embodiments, the projected position and direction are compared to the actual locations and compensated for.

In some embodiments, the method further comprises resetting the optical element and/or the display to a start position for displaying a next image.

In some embodiments, the resetting the display comprises resetting a display illumination.

In some embodiments, the motion tracker comprises an inertial measurement unit.

In some embodiments, the optical element comprises an array of one or more optical elements.

The compensating movement of the optical element and/or the display compensates for any one of six axis of movement: X, Y, Z, Roll, Yaw, and Pitch.

In some embodiments, the device is configured to be mounted on a viewer's head.

A second aspect is a computer program product comprising a non-transitory computer readable medium, having thereon a computer program comprising program instructions. The computer program is loadable into a data processing unit and configured to cause execution of the method according to the first aspect when the computer program is run by the data processing unit.

A third aspect is an apparatus for controlling projection of an image in an extended reality device, wherein the extended reality device comprises an optical element, a display, and a motion tracker, and wherein the optical element and/or the display are mounted movement flexible in the extended reality device as per the appended claims.

The apparatus comprises a controller configured to cause obtainment of motion information of the extended reality device from the motion tracker, and determination of a compensating movement of the optical element and/or the display for projection of the image based on the obtained motion information of the extended reality device.

The controller is further configured to cause control of projection of the image by movement of the optical element and/or the display based on the determined compensating movement.

In some embodiments, the controller is further configured to cause obtainment of position information for the image to be displayed from controlling circuitry operably connected to the extended reality device, obtainment of timing information for when the image is to be displayed from controlling circuitry operably connected to the extended reality device, and display of the image based on the obtained position information and the timing information.

The controller is further configured to cause obtainment of virtual motion information of objects in an extended reality environment from controlling circuitry operably connected to the extended reality device, and determination of the compensating movement of the optical element and/or the display for projection of the image based on the obtained virtual motion information of the objects in the an extended reality environment.

In some embodiments, the motion information of the extended reality device comprises position and/or movement information.

In some embodiments, the virtual motion information of objects in the extended reality environment comprises virtual position and/or virtual movement information.

In some embodiments, the control of projection of the image comprises mechanical control by movement of the optical element and/or the display based on the determined compensating movement.

In some embodiments, any one action caused by the controller is performed continuously for controlling projection of the image continuously in the extended reality device.

In some embodiments, the projection comprises an asynchronous reprojection.

In some embodiments, the asynchronous reprojection comprises an extended reality scene.

In some embodiments, the extended reality scene is rendered with a projected and predicted position and direction of a viewer's eyes.

In some embodiments, the projected position and direction are compared to the actual locations and compensated for.

In some embodiments, the controller is further configured to cause reset of the optical element and/or the display to a start position for displaying a next image.

In some embodiments, reset of the display comprises reset of a display illumination.

In some embodiments, the motion tracker comprises an inertial measurement unit.

In some embodiments, the optical element comprises an array of one or more optical elements.

The compensating movement of the optical element and/or the display compensates for any one of six axis of movement: X, Y, Z, Roll, Yaw, and Pitch.

In some embodiments, the extended reality device is configured to be mounted on a viewer's head.

In some embodiments, actuators are arranged on the optical element and/or the display for the mechanical control.

A fourth aspect is an extended reality headset comprising the apparatus according to the third aspect.

In some embodiments, the extended reality device is operably connected to controlling circuitry.

In some embodiments, the controlling circuitry comprises a Central Processing Unit, CPU, and/or a Graphics Processing Unit, GPU.

Any of the above aspects may additionally have features identical with or corresponding to any of the various features as explained above for any of the other aspects.

An advantage of some embodiments is that alternative approaches for projection of images in extended reality devices are provided.

An advantage of some embodiments is that perceived latency and lag is an extended reality device are reduced manyfold.

An advantage of some embodiments is that interruptions in rendering of an extended reality environment in an extended reality device is reduced manyfold.

An advantage of some embodiments is that responsiveness is improved since the reprojection is performed in an analog domain in contrast to a digital domain, wherein the digital domain only comprises changing contents on a display.

An advantage of some embodiments is that less capable (e.g., cheaper) graphics controlling circuitry may be utilized for extended reality applications.

An advantage of some embodiments is that motion sickness or nausea caused by visual stimulus and not corresponding to felt motion will be reduced, thus making longer extended reality sessions feasible.

It should be noted that, even if embodiments are described herein in the context of extended reality, some embodiments may be equally applicable and/or beneficial also in other contexts.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1 is a flowchart illustrating example method steps according to some embodiments;
Figure 2 is a schematic drawing illustrating an example apparatus according to some embodiments;
Figure 3 is a schematic drawing illustrating example controlling circuitry according to some embodiments;
Figure 4 is a schematic block diagram illustrating an example apparatus according to some embodiments; and
Figure 5 is a schematic drawing illustrating an example computer readable medium according to some embodiments.

### DETAILED DESCRIPTION

As already mentioned above, it should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

As mentioned above, asynchronous reprojection in prior art is limited to operate within a frame rate of the display used as well as controlling circuitry for rendering the extended reality environment.

Typically, frame rates for displays may be in the range of 72 frames per second (fps) to 144 fps.

Typically, controlling circuitry for rendering extended reality environments may comprise one or more Graphics Processing Units (GPU) and/or one or more Central Processing Units (CPU).

For example, the GPU may be used for asynchronous reprojection and simultaneously be used for rendering later frames, which leads to interruptions in the rendering pipeline.

Typically, latencies with GPU-based asynchronous reprojection from input stimulus to display output may be in the range of 2 milliseconds (ms) and without GPU-based asynchronous reprojection, latencies may be in the range of 2-3 pipeline stages, corresponding to 13-41 ms.

Generally, even if exemplification is made using a context of extended reality, it should be noted that some embodiments are equally applicable in other contexts, e.g., augmented reality, and virtual reality.

In the following, embodiments will be presented where alternative approaches for projection of images in extended reality devices are described.

Extended reality device, as described herein, may typically comprise a device configured to render any one of extended reality (XR) environments, augmented reality (AR) environments, and virtual reality (VR) environments.

Alternatively or additionally, an extended reality device, as described herein, may typically comprise a device configured to perform any one of asynchronous reprojection, asynchronous spacewarp, and motion smoothing.

For example, an extended reality device may be an extended reality device headset mountable on a viewer's (i.e., a user) head, wherein the extended reality device headset comprises an optical element, a display, and a motion tracker, and wherein the optical element and/or the display are mounted movement flexible.

Movement flexible, as described herein, may typically comprise one or more components of an extended reality device being mounted such in the extended reality device that they are physically movable in one or more degrees of freedom by, e.g., actuators, and wherein the one or more components may comprise optical elements and/or display of the extended reality device.

Projection, as described herein, may typically comprise projection of one or more images to render an extended reality environment, e.g., a virtual reality scene, comprising virtual objects.

Asynchronous reprojection, as described herein, may typically comprise a class of motion interpolation methods for ensuring responsiveness of an extended reality device, e.g., a headset, to motion, e.g., head motion.

It should be noted that, even if embodiments are described herein in the context of extended reality, some embodiments may be equally applicable and/or beneficial also in other contexts such as of augmented reality, and virtual reality.

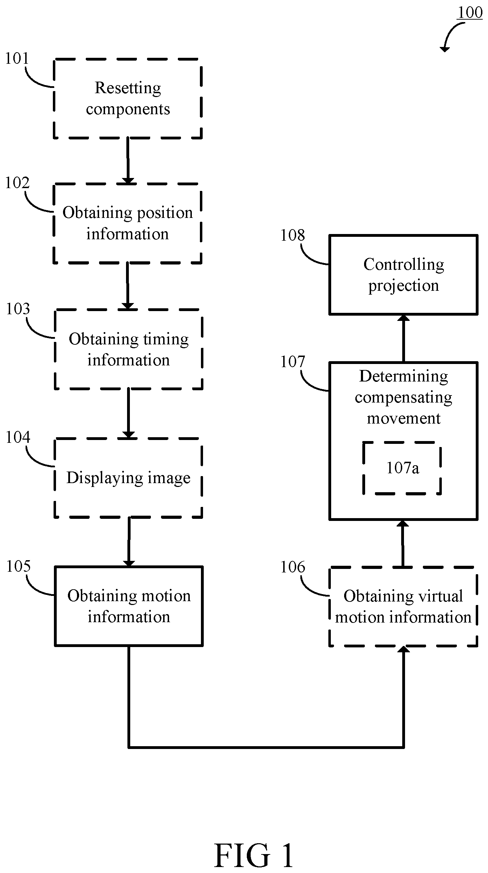

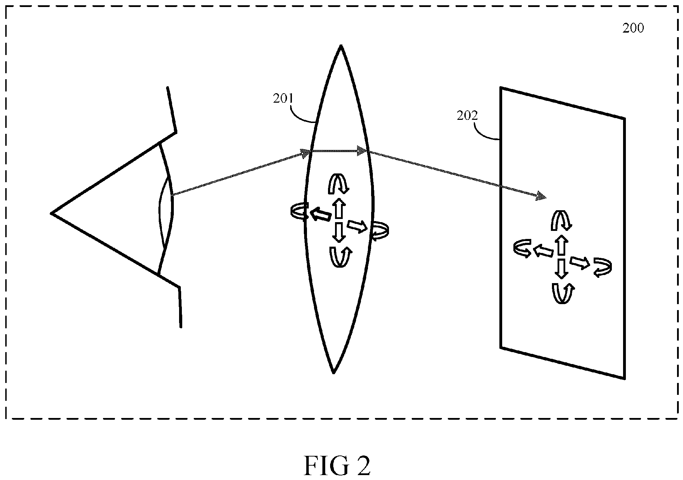

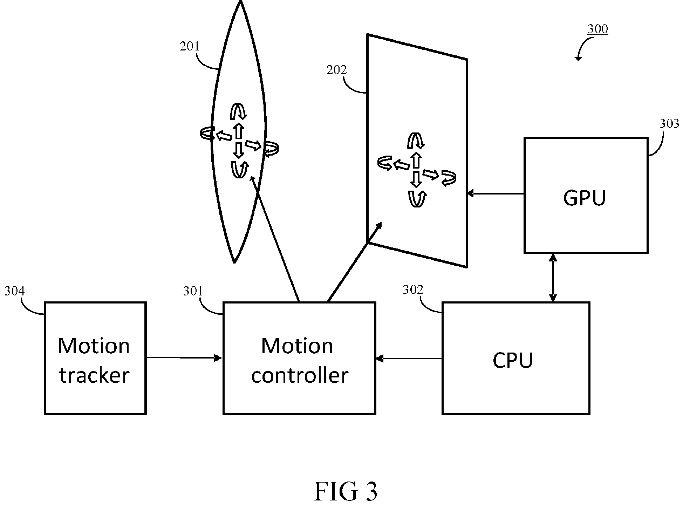

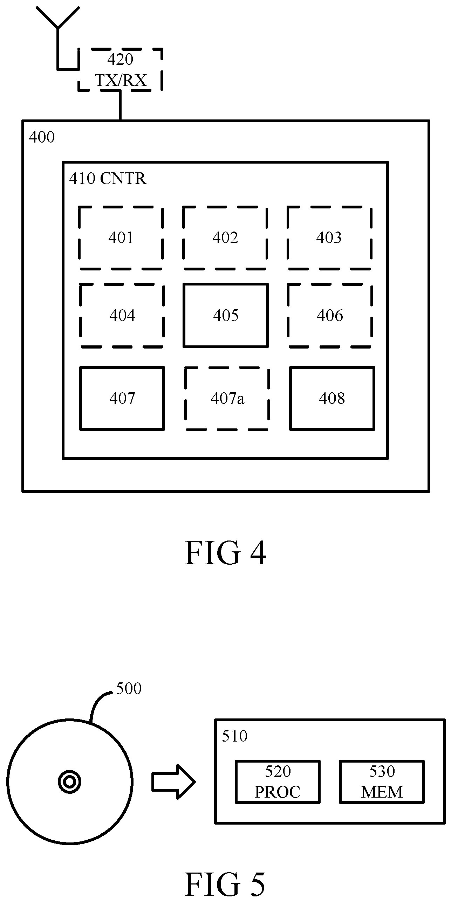

Figure 1 is a flowchart illustrating method steps of an example method 100 according to some embodiments. The method 100 is for controlling projection of an image in an extended reality device. Thus, the method 100 (or steps thereof) may, for example, be performed by apparatus 400 and/or controller 410 of Figure 4 and/or controlling circuitry of Figure 3 and/or apparatus 200 of Figure 2; of which will be described later herein.

The method 100 comprises the following steps.

In optional step 101, in some embodiments, the optical element and/or the display is reset to a start position for displaying a next image.

In some embodiments, the optical element comprises one or more lenses configured to bend the light enabling the user to correctly see images generated on the display.

For example, the optical lenses may bend the light such that the images on the display are perceived farther away than the really are.

In some embodiments, the optical element comprises one or more mirrors configured to reflect the light enabling the user to correctly see images generated on the display.

For example, the mirrors may reflect the light such that the images on the display are perceived distorted, magnified, or reduced in various ways.

In some embodiments, the display comprises a DLP display.

In optional step 102, in some embodiments, position information for the image to be displayed is obtained from controlling circuitry operably connected to the extended reality device.

In some embodiments, the controlling circuitry comprises a CPU.

For example, the CPU may be configured to determine at which coordinates the image is to be displayed.

Alternatively or additionally, the CPU may be configured to instruct other controlling circuitry to process image creation.

In optional step 103, in some embodiments, timing information for when the image is to be displayed is obtained from controlling circuitry operably connected to the extended reality device.

In some embodiments, the controlling circuitry comprises a GPU.

For example, the GPU may be configured to accelerate creation of the image in a frame buffer intended for output to a display.

Alternatively or additionally, the accelerated creation of the image by the GPU is performed in parallel to determining the coordinates of the created image by the CPU.

In optional step 104, in some embodiments, the image is displayed based on the obtained position information and the obtained timing information.

For example, the image is displayed at the coordinates determined by the CPU when the GPU has completed the creation of the image.

Alternatively or additionally, the GPU may inform the CPU when the creation of the image has been completed.

In step 105, motion information of the extended reality device is obtained from the motion tracker.

In some embodiments, the motion information of the extended reality device comprises position and/or movement information.

For example, the position and/or movement information may comprise information indicative of the position and/or movement (i.e., change of position) of an extended reality device mounted on a viewer's head.

For example, the information indicative of the position and/or movement the extended reality device may indicate a motion performed by the viewer (i.e., the user) and/or angle or position of the viewer's head and/or eyes.

For example, the extended reality device may comprise an extended reality device headset.

Alternatively or additionally, step 105 is performed continuously for controlling projection of the image continuously in the extended reality device.

In optional step 106, in some embodiments, virtual motion information of objects in an extended reality environment is obtained from controlling circuitry operably connected to the extended reality device.

In some embodiments, the virtual motion information of objects in the extended reality environment comprises virtual position and/or virtual movement information.

For example, the virtual motion information may comprise information indicative of the virtual position and/or movement of objects, i.e., perceived objects, in the extended reality environment, e.g., a virtual scene.

For example, objects in the extended reality environment may comprise non-real objects or characters, i.e., objects or characters which are not present in the physical environment, e.g., in virtual reality, and/or a combination of real objects and non-real objects, e.g., in augmented reality.

Alternatively or additionally, step 106 is performed continuously for controlling projection of the image continuously in the extended reality device.

In step 107, a compensating movement of the optical element and/or the display for projection of the image is determined based on the obtained motion information of the extended reality device (according to step 105).

Alternatively or additionally, step 107 is performed continuously for controlling projection of the image continuously in the extended reality device.

In optional step 107a, in some embodiments, the compensating movement of the optical element and/or the display is determined for projection of the image further based on the obtained virtual motion information of the objects in the extended reality environment.

Alternatively or additionally, step 107a is performed continuously for controlling projection of the image continuously in the extended reality device.

In step 108, projection of the image is controlled by moving the optical element and/or the display based on the determined compensating movement.

In some embodiments, controlling the projection of the image comprises mechanically moving the optical element and/or the display based on the determined compensating movement.

For example, actuators may be arranged on the optical element and/or the display for the mechanical control, wherein the mechanical control may generate a movement of the optical element and/or the display in one or more degrees of freedom.

Alternatively or additionally, step 108 is performed continuously for controlling projection of the image continuously in the extended reality device.

Any of the above steps for Figure 1 may additionally have features which are identical with or corresponding to any of the various features as explained below for Figures 2-5 as suitable.

Figure 2 is a schematic drawing illustrating an example apparatus 200 according to some embodiments. The apparatus 200 is for controlling projection of an image in an extended reality device. Thus, the apparatus 200 (or components thereof) may, for example, be configured to perform one or more method steps of Figure 1 and/or one or more steps otherwise described herein.

Figure 2 illustrates the apparatus 200 comprising an implementation for mechanically controlling projection of one or more images in an extended reality device.

The apparatus 200, e.g., a XR headset, comprises an optical element 201 and a display 202 mounted inside the apparatus 200.

In some embodiments, the optical element 201 may be mounted flexible to allow movement of the optical element 201, e.g., via actuators in the XR headset.

In some embodiments, the display 202 may be mounted flexible to allow movement of the display 202, e.g., via actuators in the XR headset.

In some embodiments, the optical element 201 and/or the display 202 may be mounted flexible to allow movement of the optical element 201 and/or the display 202, e.g., via actuators in the XR headset.

The movement of the optical element 201 and/or the display 202 may be performed in one or more degrees of freedom.

For example, the degrees of freedom may comprise any one of six axis of movement: X, Y, Z, Roll, Yaw, and Pitch, i.e., six degrees of freedom (6DoF).

The movement flexible implementation of the optical element 201 and/or the display 202 in the apparatus 200 may enable compensating movements of the optical element 201 and/or the display 202, wherein the compensating movements enable faster correction of visual stimulus.

By ensuring responsiveness of the apparatus 200 with a mechanical approach to projection, e.g., asynchronous reprojection, prolonged sessions in extended reality are enabled due to faster correction of visual stimulus.

Figure 3 is a schematic drawing illustrating example controlling circuitry 300 according to some embodiments. The controlling circuitry 300 is for controlling projection of an image in an extended reality device. Thus, the controlling circuitry 300 (or components thereof) may, for example, be configured to perform one or more method steps of Figure 1 and/or one or more steps otherwise described herein.

Figure 3 illustrates controlling circuitry 300 operably connected to movement flexible components 201 and 202 as described above in Figure 2. The controlling circuitry 300 comprises a motion controller 301, a CPU 302, one or more GPUs 303, and a motion tracker 304.

The controlling circuitry 300 in Figure 3 is configured for projection, e.g., asynchronous reprojection, wherein the asynchronous reprojection ensures responsiveness of an extended reality device, e.g., a headset, to motion, e.g., head motion, regardless of frame rate and type of controlling circuitry, e.g., a render pipeline's depth.

By physically, i.e., mechanically, moving the movement flexible components 201 and/or 202, reprojection may be performed continuously in correspondence to the user's eye/head/character movements and potentially combined with expected movements in the virtual world.

The mechanical reprojection, as described herein, is configured for looking into the optical elements towards the display in contrast to a digital single-lens reflex camera (DLSR), wherein light rays enter the optical elements towards the image sensor.

The mechanical reprojection is reset at the arrival of a new computed frame to the current difference between projected position and direction of the eye, and the extended reality device is then constantly motion tracked in order to determine the needed movements of the optical element 201 and/or the display 202 to smoothly reproject the shown image in the display 202 to the user. The mechanical reprojection makes the responsiveness less affected by frame rates and digital compute power.

The motion controller 301 receives position and movement of a user from a motion tracker 304, e.g. an inertial measurement unit (IMU), and sends control signals for physically moving the optical element 201 and/or the display 202 in the extended reality device.

The motion controller 301 also receives timing information from the CPU regarding when a new image is shown on the display, together with its projected position and direction that were used at the initiation of the rendering pipeline, as well as the GPU-based asynchronous reprojection done to this image.

Whenever a new image is sent to the display 202 and the physical locations of the optical element 201 and the display 202 needs to be reset, the back light of the display could briefly be turned off while the mechanical movement of the optical element 201 and display 202 is in progress.

Hence, when rendering of the virtual reality scene is completed, the projected position and direction are compared, and compensated for to the actual locations.

Figure 4 is a schematic block diagram illustrating an example apparatus 400 according to some embodiments. The apparatus 400 is for controlling projection of an image in an extended reality device. Thus, the apparatus 400 and/or the controller 410 may, for example, perform one or more method steps of Figure 1 and/or one or more steps otherwise described herein.

The extended reality device may comprise an optical element 201 and a display 202 which are mounted movement flexible as illustrated and described in connection with Figure 2.

The extended reality device may be operably connected to controlling circuitry, e.g. a motion tracker 304 as illustrated and described in connection with Figure 3 and be configured to track position and/or movements of a user wearing the extended reality device.

The apparatus 400 comprises a controller 410 configured to cause obtainment of motion information of the extended reality device from the motion tracker 304, and determination of a compensating movement of the optical element 201 and/or the display 202 for projection of the image based on the obtained motion information of the extended reality device.

The controller 410 is further configured to cause control of projection of the image by movement of the optical element 201 and/or the display 202 based on the determined compensating movement.

In some embodiments, the controller 410 is furthermore configured to cause obtainment of position information for the image to be displayed from controlling circuitry 304 operably connected to the extended reality device, obtainment of timing information 303 for when the image is to be displayed from controlling circuitry operably connected to the extended reality device, and display of the image based on the obtained position information and the timing information.

In some embodiments, the controller 410 is furthermore configured to cause obtainment of virtual motion information of objects in an extended reality environment from controlling circuitry operably 302 connected to the extended reality device, and determination of the compensating movement of the optical element 201 and/or the display 202 for projection of the image based on the obtained virtual motion information of the objects in the extended reality environment.

In some embodiments, the controller 410 is furthermore configured to cause reset of the optical element 201 and/or the display 202 to a start position for displaying a next image.

The apparatus 400 may, as mentioned above, comprise the controller 410 (CNTR; e.g., control circuitry or a controlling module), which may in turn comprise, (or be otherwise associated with; e.g., connected or connectable to), an obtainer 405, e.g., obtaining circuitry or obtaining module, configured to obtain motion information of the extended reality device from the motion tracker (compare with step 105 of Figure 1 and 304 of Figure 3).

The controller 410 further comprises, (or is otherwise associated with; e.g., connected or connectable to), a determiner 407, e.g., determining circuitry or determining module, configured to determine a compensating movement of the optical element and/or the display for projection of the image based on the obtained motion information of the extended reality device (compare with step 107 of Figure 1 and 301 of Figure 3).

The controller 410 further comprises, (or is otherwise associated with; e.g., connected or connectable to), a controller 408, e.g., controlling circuitry or controlling module, configured to control projection of the image by moving the optical element and/or the display based on the determined compensating movement (compare with step 108 of Figure 1 and 301 of Figure 3).

In some embodiments, the control of projection of the image comprises mechanical control by movement of the optical element and/or the display based on the determined compensating movement.

In some embodiments, the controller 410 furthermore comprises, (or is otherwise associated with; e.g., connected or connectable to), a resetter 401, e.g., resetting circuitry or resetting module, configured to reset the optical element and/or the display to a start position for displaying a next image (compare with step 101 of Figure 1 and 301 of Figure 3).

In some embodiments, the controller 410 furthermore comprises, (or is otherwise associated with; e.g., connected or connectable to), an obtainer 402, e.g., obtaining circuitry or obtaining module, configured to obtain position information for the image to be displayed from controlling circuitry operably connected to the extended reality device (compare with step 102 of Figure 1 and 302 of Figure 3).

In some embodiments, the controller 410 furthermore comprises, (or is otherwise associated with; e.g., connected or connectable to), an obtainer 403, e.g., obtaining circuitry or obtaining module, configured to obtain timing information for when the image is to be displayed from controlling circuitry operably connected to the extended reality device (compare with step 103 of Figure 1 and 302 of Figure 3).

In some embodiments, the controller 410 furthermore comprises, (or is otherwise associated with; e.g., connected or connectable to), a displayer 404, e.g., displaying circuitry or displaying module, configured to display the image based on the obtained position information and the obtained timing information (compare with step 104 of Figure 1 and 202 of Figures 2 and 3).

In some embodiments, the controller 410 furthermore comprises, (or is otherwise associated with; e.g., connected or connectable to), an obtainer 406, e.g., obtaining circuitry or obtaining module, configured to obtain virtual motion information of objects in an extended reality environment from controlling circuitry operably connected to the extended reality device (compare with step 106 of Figure 1 and 302 of Figure 2).

In some embodiments, the controller 410 furthermore comprises, (or is otherwise associated with; e.g., connected or connectable to), a determiner 407a, e.g., determining circuitry or determining module, configured to determine the compensating movement of the optical element and/or the display for projection of the image based on the obtained virtual motion information of the objects in the extended reality environment (compare with step 107a of Figure 1 and 301 of Figure 3).

In some embodiments, the controller 410 furthermore comprises, (or is otherwise associated with; e.g., connected or connectable to), a transceiver TX/RX 420, e.g., transceiving circuitry or transceiving module, configured to transmit and receive information related to an extended reality environment in a wireless communication network.

In some embodiments, the apparatus 400 and/or the controller 410 is completely or partially comprised in an extended reality device.

In some embodiments, the apparatus 400 and/or the controller 410 is completely or partially comprised in in a cloud environment.

Generally, when an apparatus is referred to herein, it is to be understood as a physical product. The physical product may comprise one or more parts, such as controlling circuitry in the form of one or more controllers, one or more processors, or the like.

The described embodiments and their equivalents may be realized in software or hardware or a combination thereof. The embodiments may be performed by general purpose circuitry. Examples of general purpose circuitry include digital signal processors (DSP), central processing units (CPU), Graphics Processing Units (GPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a wireless communication device.

Embodiments may appear within an electronic apparatus (such as a wireless communication device) comprising arrangements, circuitry, and/or logic according to any of the embodiments described herein. Alternatively or additionally, an electronic apparatus (such as a wireless communication device) may be configured to perform methods according to any of the embodiments described herein.

According to some embodiments, a computer program product comprises a computer readable medium such as, for example a universal serial bus (USB) memory, a plug-in card, an embedded drive or a program memory.

Figure 5 illustrates an example computer readable medium in the form of a compact disc (CD) ROM 500. The computer readable medium has stored thereon a computer program comprising program instructions. The computer program is loadable into a data processor (PROC) 520, which may, for example, be comprised in a wireless communication device 810. When loaded into the data processor, the computer program may be stored in a memory (MEM) 530 associated with or comprised in the data processor.

In some embodiments, the computer program may, when loaded into and run by the data processing unit, cause execution of one or more method steps according to, for example, Figure 1 and/or one or more of any steps otherwise described herein.

In some embodiments, the computer program may, when loaded into and run by the data processing unit, cause execution of steps according to, for example, Figure 1 and/or one or more of any steps otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

It should be understood that the details of the described embodiments are merely examples brought forward for illustrative purposes, and that all variations that fall within the scope of the claims are intended to be embraced therein.

## Claims

1. A method for controlling projection of an image in an extended reality device comprising an optical element, a display, and a motion tracker, wherein the optical element and/or the display are mounted movement flexible in the extended reality device, the method comprising the steps of:
obtaining (105) motion information of the extended reality device from the motion tracker;
determining (107) a compensating movement of the optical element and/or the display for projection of the image based on the obtained motion information of the extended reality device; and
controlling (108) projection of the image by moving the optical element and/or the display based on the determined compensating movement, wherein the method **is characterized in that** the method further comprises
obtaining (106) virtual motion information of objects in an extended reality environment from controlling circuitry operably connected to the extended reality device; and
determining (107a) the compensating movement of the optical element and/or the display for projection of the image based on the obtained virtual motion information of the objects in the extended reality environment, and wherein the compensating movement of the optical element and/or the display compensates for any one of six axis of movement: X, Y, Z, Roll, Yaw, and Pitch.

2. The method according to claim 1, further comprising the steps of:
obtaining (102) position information for the image to be displayed from controlling circuitry operably connected to the extended reality device;
obtaining (103) timing information for when the image is to be displayed from controlling circuitry operably connected to the extended reality device; and
displaying (104) the image based on the obtained position information and the obtained timing information.

3. The method according to any of claims 1-2, wherein the controlling (108) of projection of the image comprises mechanically moving the optical element and/or the display based on the determined compensating movement.

4. The method according to any of claims 1-3, wherein any one of steps 105, 106, 107, 107a, and 108 is performed continuously for controlling projection of the image continuously in the extended reality device.

5. The method according to any previous claim, further comprising the step of:
resetting (101) the optical element and/or the display to a start position for displaying a next image.

6. The method according to claim 5, wherein the resetting (101) the display comprises resetting a display illumination.

7. A computer program product comprising a non-transitory computer readable medium, having thereon a computer program comprising program instructions, the computer program being loadable into a data processing unit of an extended reality device comprising the necessary additional hardware and configured to cause execution of the method according to any of claims 1-6 when the computer program is run by the data processing unit.

8. An apparatus for controlling projection of an image in an extended reality device, wherein the extended reality device comprises an optical element, a display, and a motion tracker, and wherein the optical element and/or the display are mounted movement flexible in the extended reality device, the apparatus comprising a controller configured to cause:
obtainment of motion information of the extended reality device from the motion tracker;
determination of a compensating movement of the optical element and/or the display for projection of the image based on the obtained motion information of the extended reality device; and
control of projection of the image by movement of the optical element and/or the display based on the determined compensating movement, the apparatus being **characterized in that** the controller is further configured to cause:
obtainment of virtual motion information of objects in an extended reality environment from controlling circuitry operably connected to the extended reality device; and
determination of the compensating movement of the optical element and/or the display for projection of the image based on the obtained virtual motion information of the objects in the extended reality environment, and wherein the compensating movement of the optical element and/or the display compensates for any one of six axis of movement: X, Y, Z, Roll, Yaw, and Pitch.

9. The apparatus according to claim 8, the controller being further configured to cause:
obtainment of position information for the image to be displayed from controlling circuitry operably connected to the extended reality device;
obtainment of timing information for when the image is to be displayed from controlling circuitry operably connected to the extended reality device; and
display of the image based on the obtained position information and the timing information.

10. The apparatus according to any of claims 8-9, wherein the control of projection of the image comprises mechanical control by movement of the optical element and/or the display based on the determined compensating movement.

11. The apparatus according to any of claims 8-10, wherein any one action caused by the controller is performed continuously for controlling projection of the image continuously in the extended reality device.

12. The apparatus according to any of claims 8-11, the controller being further configured to cause:
reset of the optical element and/or the display to a start position for displaying a next image.

13. The apparatus according to any of claims 9-12, wherein actuators are arranged on the optical element and/or the display for the mechanical control.

14. An extended reality headset comprising the apparatus according to any of claims 9-13.

## Patentansprüche

1. Verfahren zum Steuern einer Bildprojektion eines Bilds in einer Erweiterte-Realität-Vorrichtung, umfassend ein optisches Element, eine Anzeige und einen Bewegungsverfolger, wobei das optische Element und/oder die Anzeige in ihrer Bewegung flexibel in der Erweiterte-Realität-Vorrichtung montiert sind, wobei das Verfahren folgende Schritte umfasst:
Erhalten (105) von Bewegungsinformationen über die Erweiterte-Realität-Vorrichtung vom Bewegungsverfolger;
Bestimmen (107) einer kompensierenden Bewegung des optischen Elements und/oder der Anzeige zur Projektion des Bilds, basierend auf den erhaltenen Bewegungsinformationen über die Erweiterte-Realität-Vorrichtung; und
Steuern (108) einer Projektion des Bilds durch Bewegen des optischen Elements und/oder der Anzeige, basierend auf der bestimmten Ausgleichsbewegung, wobei das Verfahren **dadurch gekennzeichnet ist, dass** das Verfahren ferner umfasst
Erhalten (106) von virtuellen Bewegungsinformationen über Objekte in einer erweiterten Realitätsumgebung durch Steuerungsschaltungen, die betriebsfähig mit der Erweiterte-Realität-Vorrichtung verbunden sind; und
Bestimmen (107a) der Ausgleichsbewegung des optischen Elements und/oder der Anzeige zur Projektion des Bilds, basierend auf den erhaltenen virtuellen Bewegungsinformationen über die Objekte in der erweiterten Realitätsumgebung, und wobei die Ausgleichsbewegung des optischen Elements und/oder der Anzeige Bewegungen eine von sechs Achsbewegungen kompensiert: X, Y, Z, Rollen, Gieren und Nicken.

2. Verfahren nach Anspruch 1, ferner umfassend die Schritte vom:
Erhalten (102) von Positionsinformationen über das Bild, das angezeigt werden soll, von Steuerschaltung, die betriebsfähig mit der Erweiterte-Realität-Vorrichtung verbunden ist;
Erhalten (103) von Zeitablaufinformationen darüber, wann das Bild angezeigt werden soll, von Steuerschaltung, die betriebsfähig mit der Erweiterte-Realität-Vorrichtung verbunden ist; und
Anzeigen (104) des Bilds basierend auf den erhaltenen Positionsinformationen und den erhaltenen Zeitablaufinformationen.

3. Verfahren nach einem der Ansprüche 1-2, wobei das Steuern (108) von Projektion des Bilds mechanisches Bewegen des optischen Elements und/oder der Anzeige basierend auf der bestimmten Ausgleichsbewegung umfasst.

4. Verfahren nach einem der Ansprüche 1-3, wobei einer der Schritte 105, 106, 107, 107a und 108 zum fortlaufenden Steuern von Projektion des Bilds in der Erweiterte-Realität-Vorrichtung fortlaufend durchgeführt wird.

5. Verfahren nach einem vorstehenden Anspruch, ferner umfassend den Schritt vom:
Zurücksetzen (101) des optischen Elements und/oder der Anzeige zu einer Startposition zum Anzeigen eines nächsten Bilds.

6. Verfahren nach Anspruch 5, wobei das Zurücksetzen (101) der Anzeige ein Zurücksetzen einer Anzeigebeleuchtung umfasst.

7. Computerprogrammprodukt, umfassend ein nichtflüchtiges computerlesbares Medium, das ein Computerprogramm darauf aufweist, das Programmanweisungen umfasst, wobei das Computerprogramm in eine Datenverarbeitungseinheit einer Erweiterte-Realität-Vorrichtung geladen werden kann, die die erforderliche zusätzliche Hardware umfasst und so konfiguriert ist, dass sie eine Ausführung des Verfahrens nach einem der Ansprüche 1-6 veranlasst, wenn das Computerprogramm von der Datenverarbeitungseinheit ausgeführt wird.

8. Einrichtung zum Steuern einer Bildprojektion eines Bilds in einer Erweiterte-Realität-Vorrichtung, wobei die Erweiterte-Realität-Vorrichtung ein optisches Element, eine Anzeige und einen Bewegungsverfolger umfasst, und wobei das optische Element und/oder die Anzeige in ihrer Bewegung flexibel in der Erweiterte-Realität-Vorrichtung montiert sind, wobei die Einrichtung eine Steuereinheit umfasst, die so konfiguriert ist, dass sie Folgendes veranlasst:
Erhalt von Bewegungsinformationen über die Erweiterte-Realität-Vorrichtung vom Bewegungsverfolger;
Bestimmung einer kompensierenden Bewegung des optischen Elements und/oder der Anzeige zur Projektion des Bilds, basierend auf den erhaltenen Bewegungsinformationen über die Erweiterte-Realität-Vorrichtung; und
Steuerung einer Projektion des Bilds durch Bewegung des optischen Elements und/oder der Anzeige, basierend auf der bestimmten Ausgleichsbewegung, wobei die Einrichtung **dadurch gekennzeichnet ist, dass** die Steuereinheit ferner so konfiguriert ist, dass sie Folgendes veranlasst:
Erhalt von virtuellen Bewegungsinformationen über Objekte in einer erweiterten Realitätsumgebung durch Steuerungsschaltungen, die betriebsfähig mit der Erweiterte-Realität-Vorrichtung verbunden sind; und
Bestimmung der Ausgleichsbewegung des optischen Elements und/oder der Anzeige zur Projektion des Bilds, basierend auf den erhaltenen virtuellen Bewegungsinformationen über die Objekte in der erweiterten Realitätsumgebung, und wobei die Ausgleichsbewegung des optischen Elements und/oder der Anzeige Bewegungen eine von sechs Achsbewegungen kompensiert: X, Y, Z, Rollen, Gieren und Nicken.

9. Einrichtung nach Anspruch 8, wobei die Steuereinheit ferner so konfiguriert ist, dass sie Folgendes veranlasst:
Erhalt von Positionsinformationen über das Bild, das angezeigt werden soll, von Steuerschaltung, die betriebsfähig mit der Erweiterte-Realität-Vorrichtung verbunden ist;
Erhalt von Zeitablaufinformationen darüber, wann das Bild angezeigt werden soll, von Steuerschaltung, die betriebsfähig mit der Erweiterte-Realität-Vorrichtung verbunden ist; und
Anzeige des Bilds basierend auf den erhaltenen Positionsinformationen und den Zeitablaufinformationen.

10. Einrichtung nach einem der Ansprüche 8-9, wobei die Steuerung von Projektion des Bilds mechanische Steuerung durch Bewegung des optischen Elements und/oder der Anzeige basierend auf der bestimmten Ausgleichsbewegung umfasst.

11. Einrichtung nach einem der Ansprüche 8-10, wobei eine von der Steuereinheit veranlasste Maßnahme zum fortlaufenden Steuern einer Projektion des Bilds in der Erweiterte-Realität-Vorrichtung fortlaufend durchgeführt wird.

12. Einrichtung nach einem der Ansprüche 8-11, wobei die Steuereinheit ferner so konfiguriert ist, dass sie Folgendes veranlasst:
Zurücksetzung des optischen Elements und/oder der Anzeige zu einer Startposition zum Anzeigen eines nächsten Bilds.

13. Einrichtung nach einem der Ansprüche 9-12, wobei Betätigungsvorrichtungen auf dem optischen Element und/oder der Anzeige für die mechanische Steuerung angeordnet sind.

14. Erweiterte-Realität-Headset, umfassend die Einrichtung nach einem der Ansprüche 9-13.

## Revendications

1. Procédé de commande de projection d'une image dans un dispositif de réalité étendue comprenant un élément optique, un affichage et un dispositif de suivi de mouvement, dans lequel l'élément optique et/ou l'affichage sont montés en mouvement flexible dans le dispositif de réalité étendue, le procédé comprenant les étapes de :
obtention (105) d'informations de mouvement du dispositif de réalité étendue à partir du dispositif de suivi de mouvement ;
détermination (107) d'un mouvement de compensation de l'élément optique et/ou de l'affichage pour la projection de l'image sur la base des informations de mouvement obtenues du dispositif de réalité étendue ; et
commande (108) de la projection de l'image par déplacement de l'élément optique et/ou l'affichage sur la base du mouvement de compensation déterminé, dans lequel le procédé est **caractérisé en ce que** le procédé comprend en outre
l'obtention (106) d'informations de mouvement virtuel d'objets dans un environnement de réalité étendue à partir de circuits de commande connectés fonctionnellement au dispositif de réalité étendue ; et
la détermination (107a) du mouvement de compensation de l'élément optique et/ou de l'affichage pour la projection de l'image sur la base des informations de mouvement virtuel obtenues des objets dans l'environnement de réalité étendue, et dans lequel le mouvement de compensation de l'élément optique et/ou de l'affichage compense l'un quelconque des six axes de mouvement : X, Y, Z, Roulis, Lacet et Tangage.

2. Procédé selon la revendication 1, comprenant en outre les étapes de :
obtention (102) d'informations de position pour l'image à afficher à partir de circuits de commande connectés fonctionnellement au dispositif de réalité étendue ;
obtention (103) d'informations de synchronisation pour le moment où l'image doit être affichée à partir de circuits de commande connectés fonctionnellement au dispositif de réalité étendue ; et
affichage (104) de l'image sur la base des informations de position obtenues et des informations de synchronisation obtenues.

3. Procédé selon l'une quelconque des revendications 1-2, dans lequel la commande (108) de la projection de l'image comprend le déplacement mécanique de l'élément optique et/ou de l'affichage sur la base du mouvement de compensation déterminé.

4. Procédé selon l'une quelconque des revendications 1 à 3, dans lequel l'une quelconque des étapes 105, 106, 107, 107a et 108 est réalisée en continu pour commander la projection de l'image en continu dans le dispositif de réalité étendue.

5. Procédé selon une quelconque revendication précédente, comprenant en outre les étapes de :
réinitialisation (101) de l'élément optique et/ou de l'affichage à une position de départ pour l'affichage de l'image suivante.

6. Procédé selon la revendication 5, dans lequel la réinitialisation (101) de l'affichage comprend la réinitialisation d'un éclairage d'affichage.

7. Produit de programme informatique comprenant un support lisible par ordinateur non transitoire, comportant un programme informatique comprenant des instructions de programme, le programme informatique étant chargeable dans une unité de traitement de données d'un dispositif de réalité étendue comprenant le matériel supplémentaire nécessaire et configuré pour provoquer l'exécution du procédé selon l'une quelconque des revendications 1-6 lorsque le programme informatique est exécuté par l'unité de traitement de données.

8. Dispositif de commande de la projection d'une image dans un dispositif de réalité étendue, dans lequel le dispositif de réalité étendue comprend un élément optique, un affichage et un dispositif de suivi de mouvement, et dans lequel l'élément optique et/ou l'affichage sont montés en mouvement flexible dans le dispositif de réalité étendue, l'appareil comprenant un dispositif de commande configuré pour provoquer :
l'obtention d'informations de mouvement du dispositif de réalité étendue à partir du dispositif de suivi de mouvement ;
la détermination d'un mouvement de compensation de l'élément optique et/ou de l'affichage pour la projection de l'image sur la base des informations de mouvement obtenues du dispositif de réalité étendue ; et
la commande de la projection de l'image par mouvement de l'élément optique et/ou l'affichage sur la base du mouvement de compensation déterminé, l'appareil étant **caractérisé en ce que** le dispositif de commande est en outre configuré pour provoquer :
l'obtention d'informations de mouvement virtuel d'objets dans un environnement de réalité étendue à partir de circuits de commande connectés fonctionnellement au dispositif de réalité étendue ; et
la détermination du mouvement de compensation de l'élément optique et/ou de l'affichage pour la projection de l'image sur la base des informations de mouvement virtuel obtenues des objets dans l'environnement de réalité étendue, et dans lequel le mouvement de compensation de l'élément optique et/ou de l'affichage compense l'un quelconque des six axes de mouvement : X, Y, Z, Roulis, Lacet et Tangage.

9. Appareil selon la revendication 8, le dispositif de commande étant en outre configuré pour provoquer :
l'obtention d'informations de position pour l'image à afficher à partir de circuits de commande connectés fonctionnellement au dispositif de réalité étendue ;
l'obtention d'informations de synchronisation pour le moment où l'image doit être affichée à partir de circuits de commande connectés fonctionnellement au dispositif de réalité étendue ; et
l'affichage de l'image sur la base des informations de position obtenues et des informations de synchronisation.

10. Appareil selon l'une quelconque des revendications 8-9, dans lequel la commande de la projection de l'image comprend une commande mécanique par mouvement de l'élément optique et/ou de l'affichage sur la base du mouvement de compensation déterminé.

11. Appareil selon l'une quelconque des revendications 8-10, dans lequel une quelconque action provoquée par le dispositif de commande est réalisée en continu pour commander la projection de l'image en continu dans le dispositif de réalité étendue.

12. Appareil selon l'une quelconque des revendications 8-11, le dispositif de commande étant en outre configuré pour provoquer :
la réinitialisation de l'élément optique et/ou de l'affichage à une position de départ pour l'affichage de l'image suivante.

13. Appareil selon l'une quelconque des revendications 9-12, dans lequel des actionneurs sont agencés sur l'élément optique et/ou l'affichage pour la commande mécanique.

14. Casque de réalité étendue comprenant l'appareil selon l'une quelconque des revendications 9-13.
